# EUROPEAN PATENT APPLICATION

(11) **EP 4 804 696 A1**
(43) Date of publication of application: **09.09.2026**
(21) Application number: 23957341.3
(22) Date of filing: 03.11.2023
(51) Int. Cl.: H04W 72/542

(54) **SENSING BY PROXY (SBP) PARAMETER UPDATING METHODS, ACCESS POINT DEVICES, AND STATION DEVICES**

(71) Applicant: Beijing Xiaomi Mobile Software Co., Ltd., Beijing 100085 (CN)
(72) Inventor: DONG, Xiandong, Beijing 100085 (CN)
(74) Representative: Stöckeler, Ferdinand
(86) International application number: PCT/CN2023/129692
(87) International publication number: WO 2025/091485

(57) **Abstract**

The embodiments of the present disclosure relate to sensing by proxy (SBP) parameter updating methods, access point devices and station devices. A sensing by proxy (SBP) parameter update method is applied to an access point device (AP), and comprises: in the process of establishing an SBP with an unassociated station device (U-STA), or in a TB sensing measurement process of the SBP, determining a first radio frame, the U-STA participating in the TB sensing measurement, the first radio frame carrying first identification information, and the first identification information comprising a parameter variation information bit of a BSS where the AP is located; and transmitting to the U-STA the first radio frame. Thus, by means of the parameter change information bit in the first identification information, the U-STA can determine a parameter that varies, thus helping to participate in the TB sensing measurement process.

## Description

### FIELD

The present disclosure relates to the field of wireless communication technologies, and in particular to a sensing by proxy (SBP) parameter updating method, an access point (AP) device and a station device.

### BACKGROUND

In currently studied Wi-Fi technologies, a wireless local area network (WLAN) sensing technology may be supported, for example, in application scenarios such as a location discovery, a proximity detection, and a presence detection in dense environments (such as home environments and enterprise environments). During a WLAN sensing process, roles of a station (STA) device and an access point (AP) device are generally interchangeable, for instance, both may act as a sensing initiator or a sensing transmitter. When acting as the sensing initiator or the sensing transmitter, an AP device may communicate with a plurality of STA devices. However, an STA device does not have the above capability and can only perform one-to-one communication with a single sensing responder, which on the one hand causes a waste of spectrum resources, and on the other hand causes an increased latency. For communication scenarios with high latency requirements, the latency requirements may not be met.

In order to address this issue, a method for making the AP device perform the WLAN sensing measurement by proxy for STA, i.e., a sensing by proxy (SBP) measurement, is proposed. During an SBP process, parameters of the AP device may change. Therefore, there is a need to provide a method for updating SBP parameters.

### SUMMARY

Embodiments of the present disclosure provide a sensing by proxy (SBP) parameter updating method, an access point (AP) device and a station device to provide a way to update an SBP parameter.

In an aspect, the embodiments of the present disclosure provide a method for updating a sensing by proxy (SBP) parameter, performed by an access point (AP) device, including: determining a first radio frame during a process of establishing an SBP with an unassociated station (U-STA) device or during a trigger-based (TB) sensing measurement process of an SBP, where the U-STA device participates in TB sensing measurement, the first radio frame carries first identification information, and the first identification information includes a parameter change information bit of a basic service set (BSS) in which the AP device is located; and sending the first radio frame to the U-STA device.

In another aspect, the embodiments of the present disclosure provide a method for updating a sensing by proxy (SBP) parameter, performed by a station device, including: receiving a first radio frame during a process of establishing an SBP with an access point (AP) device or during a trigger-based (TB) sensing measurement process of an SBP; where the station device is an unassociated station (U-STA) device of the AP device, and the U-STA device participates in TB sensing measurement; and where the first radio frame carries first identification information, and the first identification information includes a parameter change information bit of a basic service set (BSS) in which the AP device is located.

In another aspect, the embodiments of the present disclosure provide an access point (AP) device, including: a determining module configured to determine a first radio frame during a process of establishing a sensing by proxy (SBP) with an unassociated station (U-STA) device or during a trigger-based (TB) sensing measurement process of an SBP, where the U-STA device participates in TB sensing measurement, the first radio frame carries first identification information, and the first identification information includes a parameter change information bit of a basic service set (BSS) in which the AP device is located; and a sending module configured to send the first radio frame to the U-STA device.

In another aspect, the embodiments of the present disclosure provide a station device, including: a first receiving module configured to receive a first radio frame during a process of establishing a sensing by proxy (SBP) with an access point (AP) device or during a trigger-based (TB) sensing measurement process of an SBP; where the station device is an unassociated station (U-STA) device of the AP device, and the U-STA device participates in TB sensing measurement; and where the first radio frame carries first identification information, and the first identification information includes a parameter change information bit of a basic service set (BSS) in which the AP device is located.

In another aspect, the embodiments of the present disclosure provide an access point (AP) device, including: one or more processors; where the AP device is configured to perform the method for updating the sensing by proxy (SBP) parameter according to the embodiments of the present disclosure.

In another aspect, the embodiments of the present disclosure provide a station device, including: one or more processors; where the station device is configured to perform the method for updating the sensing by proxy (SBP) parameter according to the embodiments of the present disclosure.

In another aspect, the embodiments of the present disclosure provide a communication system, including an access point (AP) device and a station device, where the AP device is configured to perform the method for updating the sensing by proxy (SBP) parameter according to the embodiments of the present disclosure, and the station device is configured to perform the method for updating the sensing by proxy (SBP) parameter according to the embodiments of the present disclosure.

In another aspect, the embodiments of the present disclosure provide a storage medium for storing instructions that, when executed on a communication device, cause the communication device to perform the method for updating the sensing by proxy (SBP) parameter according to the embodiments of the present disclosure.

In the embodiments of the present disclosure, during the process of establishing the SBP between the AP device and the U-STA device, or during the TB sensing measurement process of the SBP, the first radio frame is determined. The first radio frame carries the first identification information, and the first identification information includes the parameter change information bit of the BSS in which the AP device is located. In this way, the U-STA device may determine one or more changed parameters according to the parameter change information bit in the first identification information, thereby facilitating its participation in the TB sensing measurement process.

Additional aspects and advantages of the embodiments of the present disclosure will be set forth in part in the following description, and these will become apparent from the following description or may be learned through practice of the present disclosure.

### BRIEF DESCRIPTION OF THE DRAWINGS

In order to illustrate technical solutions in embodiments of the present disclosure more clearly, drawings required for describing the embodiments are introduced below. These drawings below are only some embodiments of the present disclosure and do not constitute a limitation on the scope of the present disclosure.
FIG. 1 is a schematic diagram illustrating an architecture of a communication system according to an embodiment of the present disclosure.
FIG. 2 is a schematic interaction diagram according to an embodiment of the present disclosure.
FIG. 3 is another schematic interaction diagram according to an embodiment of the present disclosure.
FIG. 4 is another schematic interaction diagram according to an embodiment of the present disclosure.
FIG. 5 is a flow chart of a method for updating a sensing by proxy (SBP) parameter according to an embodiment of the present disclosure.
FIG. 6 is another flow chart of a method for updating a sensing by proxy (SBP) parameter according to an embodiment of the present disclosure.
FIG. 7 is a block diagram illustrating an access point (AP) device according to an embodiment of the present disclosure.
FIG. 8 is a block diagram illustrating a station device according to an embodiment of the present disclosure.
FIG. 9 is a block diagram illustrating a terminal according to an embodiment of the present disclosure.
FIG. 10 is a block diagram illustrating a chip according to an embodiment of the present disclosure.

### DETAILED DESCRIPTION

Embodiments of the present disclosure provide a method for updating a sensing by proxy (SBP) parameter, an access point (AP) device and a station device.

In a first aspect, the embodiments of the present disclosure provide a method for updating a sensing by proxy (SBP) parameter, including: determining a first radio frame during a process of establishing an SBP with an unassociated station (U-STA) device or during a trigger-based (TB) sensing measurement process of an SBP, where the U-STA device participates in TB sensing measurement, the first radio frame carries first identification information, and the first identification information includes a parameter change information bit of a basic service set (BSS) in which the AP device is located; and sending the first radio frame to the U-STA device.

In the above embodiment, the U-STA device may determine the changed parameter according to the parameter change information bit in the first identification information, thereby facilitating its participation in the TB sensing measurement process.

In combination with some embodiments of the first aspect, in some embodiments, determining the first radio frame during the process of establishing the SBP with the U-STA device or during the TB sensing measurement process of the SBP includes: receiving an SBP request frame sent by the U-STA device during the process of establishing the SBP with the U-STA device, and in a case that the SBP request frame indicates that the U-STA device participates in the TB sensing measurement, and a parameter of the BSS in which the AP device is located changes, determining the first radio frame, where the first radio frame includes an SBP response frame; or in a case that a parameter of the BSS in which the AP device is located changes during the TB sensing measurement process of the SBP, determining the first radio frame, where the first radio frame includes a sensing measurement request frame.

In the above embodiments, during the process of establishing the SBP between the AP device and the U-STA, or during the TB sensing measurement process of the SBP, the first identification information is carried in the first radio frame to indicate that the parameter of the BSS where the AP device is located changes.

In combination with some embodiments of the first aspect, in some embodiments, the SBP response frame includes a sensing measurement parameter element; the first identification information is carried in the sensing measurement parameter element; and the parameter of the BSS includes at least one of: a transmit power envelope (TPE) or a punctured channel.

In the above embodiments, by carrying one or both changed parameters of the TPE and the punctured channel in the sensing measurement parameter element, the U-STA device is enabled to participate in the TB sensing measurement process based on the one or both changed parameters.

In combination with some embodiments of the first aspect, in some embodiments, the sensing measurement request frame includes a sensing measurement parameter element; the first identification information is carried in the sensing measurement parameter element; and the parameter of the BSS includes at least one of: a TPE or a punctured channel.

In the above embodiments, during the TB sensing measurement process, by carrying one or both changed parameters of the TPE and the punctured channel in the sensing measurement parameter element, the U-STA device is enabled to participate in the TB sensing measurement process based on the one or both changed parameters.

In combination with some embodiments of the first aspect, in some embodiments, the parameter change information bit includes a first identification bit and a second identification bit, the first identification bit being used to identify whether the TPE is changed, the second identification bit being used to identify whether the punctured channel is changed; or the parameter change information bit includes a third identification bit identifying that at least one of the TPE or the punctured channel is changed, and the first radio frame carries a subelement corresponding to a changed parameter, an element identifier of the subelement being the same as an element identifier of the sensing measurement parameter element in the first radio frame.

In the above embodiments, a specific form of the parameter change information bit is provided to refine an SBP process.

In combination with some embodiments of the first aspect, in some embodiments, the subelement includes the changed parameter; a subelement corresponding to the TPE includes a TPE subelement; and a subelement corresponding to the punctured channel includes a bandwidth indication subelement.

In the above embodiments, the changed parameter is carried by the TPE subelement or the bandwidth indication subelement, so that the U-STA device may determine the changed parameters based on the TPE subelement and the bandwidth indication subelement, thereby facilitating its participation in the TB sensing measurement process.

In a second aspect, the embodiments of the present disclosure provide a method for updating a sensing by proxy (SBP) parameter, including: receiving a first radio frame during a process of establishing an SBP with an access point (AP) device or during a trigger-based (TB) sensing measurement process of an SBP; where the station device is an unassociated station (U-STA) device of the AP device, and the U-STA device participates in TB sensing measurement; and where the first radio frame carries first identification information, and the first identification information includes a parameter change information bit of a basic service set (BSS) in which the AP device is located.

In combination with some embodiments of the second aspect, in some embodiments, receiving the first radio frame during the process of establishing the SBP with the AP device or during the TB sensing measurement process of the SBP includes: sending an SBP request frame to the AP device during the process of establishing the SBP with the AP device, where the SBP request frame indicates that the U-STA device participates in the TB sensing measurement, and receiving the first radio frame sent by the AP device, where the first radio frame includes an SBP response frame; or receiving the first radio frame sent by the AP device during the TB sensing measurement process of the SBP, where the first radio frame includes a sensing measurement request frame.

In combination with some embodiments of the second aspect, in some embodiments, the SBP response frame includes a sensing measurement parameter element; the first identification information is carried in the sensing measurement parameter element; and a parameter of the BSS includes at least one of: a transmit power envelope (TPE) or a punctured channel.

In combination with some embodiments of the second aspect, in some embodiments, the sensing measurement request frame includes a sensing measurement parameter element; the first identification information is carried in the sensing measurement parameter element; and a parameter of the BSS includes at least one of: a TPE or a punctured channel.

In combination with some embodiments of the second aspect, in some embodiments, the parameter change information bit includes a first identification bit and a second identification bit, the first identification bit being used to identify whether the TPE is changed, the second identification bit being used to identify whether the punctured channel is changed; or the parameter change information bit includes a third identification bit, the third identification bit identifying that at least one of the TPE or the punctured channel is changed, and the first radio frame carries a subelement corresponding to a changed parameter, an element identifier of the subelement being the same as an element identifier of the sensing measurement parameter element in the first radio frame.

In combination with some embodiments of the second aspect, in some embodiments, a subelement corresponding to the TPE includes a TPE subelement; a subelement corresponding to the punctured channel includes a bandwidth indication subelement.

In a third aspect, the embodiments of the present disclosure provide an access point (AP) device, including at least one of: a determining module or a sending module. The AP device is configured to perform the optional implementations of the first aspect.

In a fourth aspect, the embodiments of the present disclosure provide a station device, including a first receiving module. The station device is configured to perform the optional implementations of the second aspect.

In a fifth aspect, the embodiments of the present disclosure provide an access point (AP) device, including one or more processors. The AP device is configured to perform the optional implementations of the first aspect.

In a sixth aspect, the embodiments of the present disclosure provide a station device, including one or more processors. The station device is configured to perform the optional implementations of the second aspect.

In a seventh aspect, the embodiments of the present disclosure provide a communication system, including an access point (AP) device and a station device, where the AP device is configured to perform the optional implementations of the first aspect, and the station device is configured to perform the optional implementations of the second aspect.

In an eighth aspect, the embodiments of the present disclosure provide a storage medium for storing instructions that, when executed on a communication device, cause the communication device to perform the optional implementations of the first aspect or the optional implementations of the second aspect.

In a ninth aspect, the embodiments of the present disclosure provide a program product, which, when executed by a communication device, causes the communication device to perform the method described in the optional implementations of the first aspect or the method described by in optional implementations of the second aspect.

In a tenth aspect, the embodiments of the present disclosure provide a computer program, which, when on a computer, causes the computer to perform the method described in the optional implementations of the first aspect or the method described by in optional implementations of the second aspect.

In an eleventh aspect, the embodiments of the present disclosure provide a chip or a chip system, which includes a processing circuit configured to execute the method described in the optional implementations of the first aspect or the method described by in optional implementations of the second aspect..

It can be understood that the above AP device, station device, communication system, storage medium, program product, computer program, chip or chip system each is used to perform the method provided in the embodiments of the present disclosure. Therefore, beneficial effects that can be achieved may refer to beneficial effects in the corresponding method, which will not be repeated here.

Embodiments of the present disclosure provide a method for updating a sensing by proxy (SBP) parameter, an access point (AP) device and a station device. In some embodiments, terms such as method for updating a sensing by proxy (SBP) parameter, method for sending a signal, and method for sending a radio frame may be used interchangeably, and terms such as information processing system and communication system may be used interchangeably.

The embodiments of the present disclosure are not exhaustive, but are merely illustrative of some embodiments, and are not intended to constitute a specific limitation on the scope of protection of the present disclosure. In the absence of contradiction, each step in a certain embodiment can be implemented as an independent embodiment, and steps can be combined arbitrarily. For example, a solution after removing some steps in a certain embodiment may also be implemented as an independent embodiment, and the order of steps in a certain embodiment can be exchanged arbitrarily. In addition, optional implementations in a certain embodiment can be combined arbitrarily. Furthermore, various embodiments may be combined arbitrarily, can be combined arbitrarily, for example, some or all steps of different embodiments can be combined arbitrarily, and a certain embodiment may be combined arbitrarily with optional implementation methods of other embodiments.

In various embodiments of the present disclosure, unless otherwise specified and there is no logical conflict, terms and/or descriptions among the embodiments are consistent and may be cross-referenced. Technical features in different embodiments may be combined according to their inherent logical relationships to form new embodiments.

The terms used in the embodiments of the present disclosure are only for the purpose of describing particular embodiments and do not constitute a limitation on the present disclosure.

In the embodiments of the present disclosure, a term "multiple" means two or more.

In some embodiments, terms such as "at least one of ...", "one or more", "a plurality of" and "multiple" and the like may be used interchangeably.

In some embodiments, expressions such as "at least one of A or B", "A and/or B", "A in one case, B in another case", "in response to one case A, in response to another case B", etc., may, depending on circumstances, include the following technical solutions: in some embodiments, A (A is performed independently of B); in some embodiments, B (B is performed independently of A); in some embodiments, selecting to perform either A or B (A and B are selectively performed); in some embodiments, A and B (both A and B are performed). The same applies where there are more branches such as A, B, C, and the like.

In some embodiments, expressions such as "A or B" may, depending on circumstances, include the following technical solutions: in some embodiments, A (A is performed independently of B); in some embodiments, B (B is performed independently of A); in some embodiments, selecting to perform either A or B (A and B are selectively performed). The same applies where there are more branches such as A, B, C, and the like.

Prefixes such as "first" and "second" in the embodiments of the present disclosure are only used to distinguish different description objects, and do not constitute restrictions on a position, order, priority, quantity or content of the description objects. Statement of the description object refers to descriptions in the context of the claims or the embodiments, and should not constitute unnecessary restrictions due to the use of the prefixes. For example, if the description object is a "field", an ordinal number in front of the "field" in a "first field" and the a "second field" does not limit the position or order between the "fields", and the "first" and "second" do not limit whether the "field" they modified are in the same message, nor do they limit the order of the "first field" and the "second field". As another example, if the description object is a "level", an ordinal number in front of the "level" in the "first level" and the "second level" does not limit the priority between the "levels". As another example, a number of the description objects is not limited by the ordinal number, and may be one or more. Taking a "first apparatus" as an example, a number of "apparatus" may be one or more. In addition, objects modified by different prefixes may be the same or different. For example, if the description object is "apparatus", the "first apparatus" and a "second device" may be the same apparatus or different apparatus, and their types may be the same or different. As another example, if the description object is "information", "first information" and "second information" may be same information or different information, and their contents may be the same or different.

In some embodiments, "include A", "contain A", "used to indicate A", and "carry A" may be interpreted as directly carrying A or indirectly indicating A.

In some embodiments, terms such as "in response to ...", "in response to determining ...", "in a case that ...", "at a time of ...", "when ...", "if ...", "in case ..." etc. may be used interchangeably.

In some embodiments, terms such as "greater than", "greater than or equal to", "not less than", "more than", "more than or equal to", "not less than", "higher than", "higher than or equal to", "not lower than", and "above" may be used interchangeably, and terms such as "less than", "less than or equal to", "not greater than", "less than", "less than or equal to", "no more than", "lower than", "lower than or equal to", "not higher than" and "below" may be used interchangeably.

In some embodiments, an apparatus or a device may be interpreted as physical or virtual, and its name is not limited to a name recorded in the embodiments. In some cases, it may also be understood as "equipment", "device", "circuit", "network element", "node", "function", "unit", "section", "system", "network", "chip", "chip system", "entity", "subject" and the like.

In some embodiments, an acquisition of data and information, etc. may comply with laws and regulations of a country where the data and information are obtained.

In some embodiments, the data and information, etc. may be obtained after obtaining user's consent.

In addition, each element, each row, or each column in a table of the embodiments of the present disclosure may be implemented as an independent embodiment, and a combination of any elements, any rows, and any columns may also be implemented as an independent embodiment.

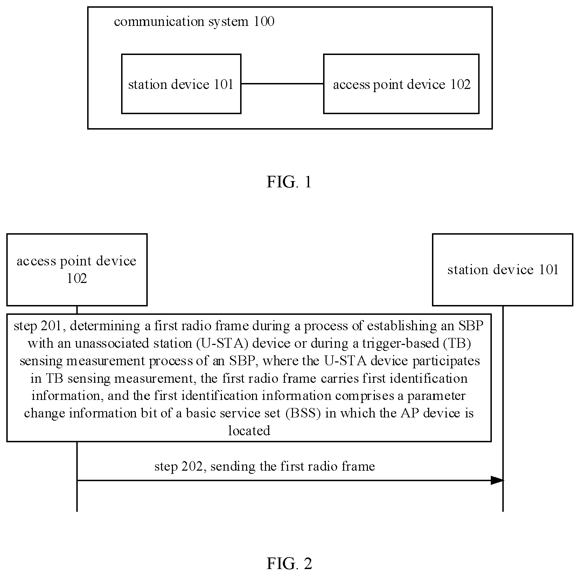

FIG. 1 is a schematic diagram illustrating an architecture of a communication system according to an embodiment of the present disclosure.

As shown in FIG. 1, a communication system 100 includes a station (STA) device 101 and an access point (AP) device 102.

In some embodiments, the STA device 101 includes, for example, a wireless communication chip, a wireless sensor, or a wireless communication terminal, each supporting a Wi-Fi communication function. Optionally, the wireless communication terminal includes, but is not limited to, at least one of: a mobile phone, a wearable device, an internet of things (IoT) device supporting the Wi-Fi communication function, a vehicle with communication capabilities, a smart vehicle, a tablet (Pad), a computer with wireless transmission and reception capabilities, a virtual reality (VR) terminal device, an augmented reality (AR) terminal device, a wireless terminal device used in industrial control, a wireless terminal device used in self-driving, a wireless terminal device used in remote medical surgery, a wireless terminal device used in smart grid, a wireless terminal device used in transportation safety, a wireless terminal device used in smart city, or a wireless terminal device used in smart home.

Specifically, the STA device 101 may be a terminal device or a network device equipped with a wireless fidelity (Wi-Fi) chip. Optionally, the STA device 101 may support various WLAN standards such as 802.11ax, 802.11be, 802.11ac, 802.11n, 802.11g, 802.11b, 802.11a, 802.11bf, 802.11bn, and the like, as well as next-generation 802.11 protocols, but is not limited thereto.

In some embodiments, the AP device 102 may be an access point through which a mobile terminal enters a wired network. An AP device acts as a bridge connecting a wired network and a wireless network. A main function of the AP device is to connect various wireless network clients together and then connect the wireless network to an Ethernet. Specifically, the AP device may be a terminal device or a network device equipped with a Wi-Fi chip. Optionally, the AP device may support various WLAN standards such as 802.11ax, 802.11be, 802.11ac, 802.11n, 802.11g, 802.11b, 802.11a, 802.11bf, 802.11bn, and the like, as well as next-generation 802.11 protocols, but is not limited thereto.

Optionally, in the embodiments of the present disclosure, the AP device and the STA device may be devices that support multi-link, for example, they may be respectively referred to as an access point multi-link device (AP MLD) and a non-access point multi-link device (Non-AP MLD). The AP MLD may represent an access point supporting multi-link communication functionality, and the Non-AP MLD may represent a station supporting the multi-link communication functionality.

It can be understood that the communication system described in the embodiments of the present disclosure is for the purpose of illustrating the technical solutions of the embodiments of the present disclosure more clearly, and does not constitute a limitation on the technical solutions proposed in the embodiments of the present disclosure. A person of ordinary skill in the art may recognize that with an evolution of a system architecture and emergence of a new service scenario, the technical solutions proposed in the embodiments of the present disclosure is also applicable to similar technical problems.

The following embodiments of the present disclosure may be applied to the communication system 100 shown in FIG. 1, or part of entities, but are not limited thereto. The entities shown in FIG. 1 are examples, and the communication system may include all or part of the entities in FIG. 1, or may include other entities other than FIG. 1. A number and form of the entities are arbitrary. The entities may be physical or virtual. A connection relationship between the entities is an example. The entities may be connected or disconnected. A connection between the entities may be in any manner, which may be a direct connection or an indirect connection, and may be a wired connection or a wireless connection.

The embodiments of the present disclosure may be applied to a wireless local area network (WLAN), for example, a local area network that adopts the 802.11 series of protocols. In a WLAN, a basic service set (BSS) is a fundamental component of the WLAN. A BSS network consists of station devices that have a certain association within a specific coverage area. A case of association is that the station devices communicate directly with each other in an ad hoc network, which is called an independent basic service set (IBSS). Another more common case is that in a BSS network, there is only one central station dedicated to managing the BSS, which is referred to as an access point device, and all other STA devices in the network are associated with it. Other station devices in the BSS network that are not the central station are referred to as terminals, also called non-AP STAs. Terminals and non-AP STAs are collectively referred to as STAs. When describing an STA, there is no need to distinguish between an AP and a non-AP STA. In the same BSS network, due to factors such as distance and transmission power, one STA cannot detect other STAs that are far away from it, and the two are hidden nodes with respect to each other.

FIG. 2 is a schematic interaction diagram of a method for updating a sensing by proxy (SBP) parameter according to an embodiment of the present disclosure. As shown in FIG. 2, the method may include the following steps.

In step 201, an access point (AP) device 102 determines a first radio frame during a process of establishing an SBP with an unassociated station (U-STA) device (a station device 101 in FIG. 2) or during a trigger-based (TB) sensing measurement process of an SBP. The U-STA device participates in TB sensing measurement, the first radio frame carries first identification information, and the first identification information includes a parameter change information bit of a basic service set (BSS) in which the AP device is located.

During an SBP process, a parameter of an AP device may change. However, since a U-STA device does not establish an association with the AP device, the AP device can not control a behavior of the U-STA device. If some parameters of the AP device change, the AP device may be unable to control the U-STA device participating in sensing measurement. Therefore, in the embodiments of the present disclosure, during the process of establishing the SBP between the AP device and the U-STA device, or during the TB sensing measurement process of the SBP, the first radio frame is determined. The first radio frame carries the first identification information, and the first identification information includes the parameter change information bit of the BSS in which the AP device is located. In this way, the U-STA device may determine which parameter is changed according to the parameter change information bit in the first identification information, thereby facilitating its participation in the TB sensing measurement process.

In step 202, the first radio frame is sent to the U-STA device.

In a case that the U-STA device acts as an SBP initiator to initiate an SBP process and requests the AP device to act as an SBP responder to initiate a TB sensing measurement process by proxy, if the U-STA device participates in the TB sensing measurement process, it may update a relevant parameter according to the parameter change information bit in the first radio frame, and perform the sensing measurement process with the SBP responder.

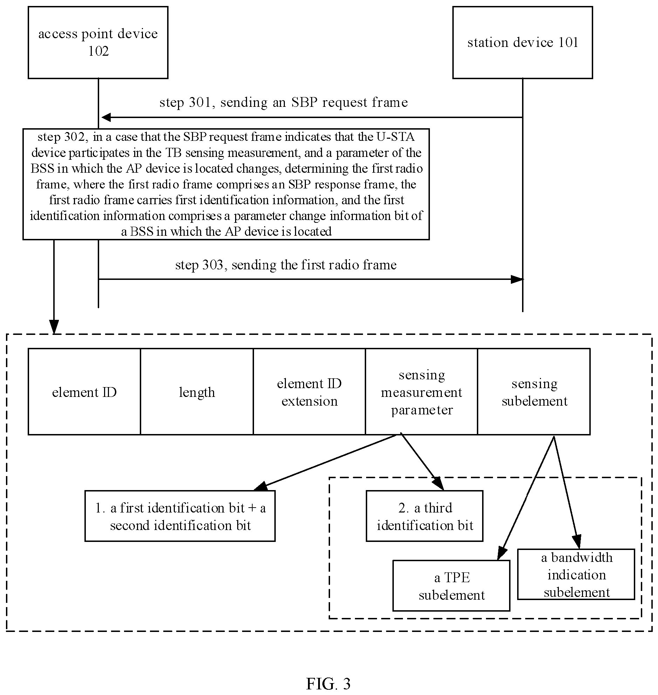

FIG. 3 is another schematic interaction diagram of a method for updating a sensing by proxy (SBP) parameter according to an embodiment of the present disclosure. As shown in FIG. 3, during a process of establishing an SBP, the method may include the following steps.

In step 301, an unassociated station (U-STA) device (a station device 101 in FIG. 3) sends an SBP request frame to an access point (AP) device 102.

During the process of establishing the SBP, the U-STA device sends the SBP request frame to the AP device, requesting the AP device to act as an SBP responder to initiate a TB sensing measurement process as a proxy for the U-STA. Optionally, before sending the SBP request frame, the U-STA device may, by listening to a beacon frame or an unsolicited probe response frame sent by the AP device, learn about sensing capabilities and specific parameters of sensing measurement supported by the AP device according to an extended capabilities information element and a sensing capabilities information element carried in the beacon frame and/or the unsolicited probe response frame. In a case that the sensing capabilities and the specific parameters of the sensing measurement supported by the AP device satisfy parameters required for the SBP process that the U-STA device intends to initiate, the U-STA device sends the SBP request frame to the AP device.

In step 302, in a case that the SBP request frame indicates that the U-STA device participates in the TB sensing measurement, and a parameter of the BSS in which the AP device is located changes, the AP device 102 determines the first radio frame. The first radio frame includes an SBP response frame

A manner of indicating that the U-STA device participates in the TB sensing measurement in the SBP request frame may be setting a sensing responder bit in an SBP parameter control field to 1. If the sensing responder bit is set to 1, it can be determined that the U-STA device participates in the TB sensing measurement. In this case, if the parameter of the BSS in which the AP device is located changes, the AP device determines the first radio frame. The first radio frame carries the first identification information, and the first identification information includes the parameter change information bit of the BSS in which the AP device is located. In this way, the U-STA device may determine which parameter is changed according to the parameter change information bit in the first identification information, thereby facilitating its participation in the TB sensing measurement process.

The first radio frame includes the SBP response frame. For example, a new information bit in the SBP response frame is used to carry the first identification information. It can be understood that a change of the parameter of the BSS in which the AP device is located may be a change that occurs after receiving the SBP request frame, or may be a change relative to a BSS parameter broadcast by the AP device most recently via the beacon frame and/or the unsolicited probe response frame.

In step 303, the first radio frame is sent to the U-STA device.

In some embodiments, as shown in FIG. 3, the SBP response frame includes a sensing measurement parameter element.

The first identification information is carried in the sensing measurement parameter element. A new information bit in the sensing measurement parameter element is used to carry the first identification information.

The parameter of the BSS includes at least one of: a transmit power envelope (TPE) or a punctured channel. It can be understood that, in the embodiments of the present disclosure, the parameter of the BSS also include parameters other than the TPE and the punctured channel, and will not be repeated here.

In some embodiments, as shown in FIG. 3, the parameter change information bit includes case 1 and case 2.

In case 1, the parameter change information bit includes a first identification bit and a second identification bit. The first identification bit is used to identify whether the TPE is changed. For example, the first identification bit being set to "0" indicates that the TPE is not changed, and the first identification bit being set to "1" indicates that the TPE is changed.

The second identification bit is used to identify whether the punctured channel is changed. For example, the second identification bit being set to "0" indicates that the punctured channel is not changed, and the second identification bit being set to "1" indicates that the punctured channel is changed.

In case 2, the parameter change information bit includes a third identification bit identifying that at least one of the TPE or the punctured channel is changed, and the first radio frame carries a subelement corresponding to a changed parameter, an element identifier of the subelement being the same as an element identifier of the sensing measurement parameter element in the first radio frame.

If the at least one of the TPE or the punctured channel is changed, the first radio frame carries one or more subelements corresponding to changed parameter(s), and for the one or more subelements, an element identifier is the same as an element identifier of an SBP information element in the first radio frame, so as to facilitate identification that the subelement is a subelement of the sensing measurement parameter.

In some embodiments, in case 2, as shown in FIG. 3, the subelement include a changed parameter. A subelement corresponding to the TPE includes a TPE subelement. A subelement corresponding to the punctured channel includes a bandwidth indication subelement. A format of the TPE subelement is shown in Table 1 below.

**Table 1:**

| information content | element ID | length | transmit power information | maximum transmit power | extension maximum transmit power |
|---|---|---|---|---|---|
| octets | 1 | 1 | 1 | variable | variable |

As shown in Table 1, the element ID is the same as the element ID of the sensing measurement parameter element, and the TPE subelement carries the changed parameter. For example, one or more parameters of the transmit power information, the maximum transmit power or the extension maximum transmit power are changed.

A format of the bandwidth indication subelement is shown in Table 2 below.

**Table 2:**

| information content | element ID | length | extension element ID | bandwidth indication parameter | bandwidth indication information |
|---|---|---|---|---|---|
| octets | 1 | 1 | | 1 | 3 or 5 |

As shown in Table 2, the element ID is the same as the element ID of the sensing measurement parameter element, and the bandwidth indication subelement carries the changed parameter. For example, one or more parameters of the extension element ID, the bandwidth indication parameter or the bandwidth indication information are changed.

Further, as shown in Table 3, a format of the bandwidth indication parameter is as follows.

**Table 3:**

| content | reserved | disabled subchannel bitmap present | reserved |
|---|---|---|---|
| bits | 1 | 1 | 6 |
| order of bits | B0 | B1 | B2 to B7 |

As shown in Table 3, in a case that a change in the bandwidth indication parameter may be that a change occurs in the disabled subchannel bitmap, and the bandwidth indication subelement carries the changed parameter.

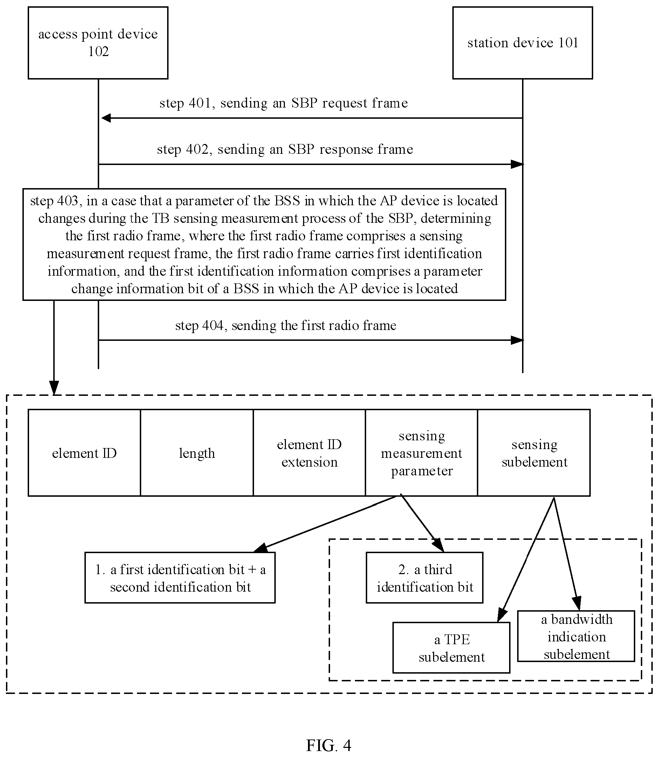

FIG. 4 is another schematic interaction diagram of a method for updating a sensing by proxy (SBP) parameter according to an embodiment of the present disclosure. As shown in FIG. 4, during a process of establishing an SBP, the method may include the following steps.

In step 401, an unassociated station (U-STA) device (a station device 101 in FIG. 4) sends an SBP request frame to an access point (AP) device 102.

The SBP request frame indicates that the U-STA device participates in trigger-based (TB) sensing measurement.

In step 402, the AP device replies with an SBP response frame to the U-STA device.

It can be understood that before step 403, i.e., during the process of establishing the SBP, a parameter of a basic service set (BSS) in which the AP device is located may also change. In this case, reference is made to steps 301 to 303 for execution, and will not repeated here in the embodiments of the present disclosure.

In step 403, in a case that the parameter of the BSS in which the AP device is located changes during a TB sensing measurement process, the AP device determines a first radio frame. The first radio frame carries a sensing measurement request frame. The first radio frame carries first identification information, and the first identification information includes a parameter change information bit of the BSS in which the AP device is located.

During the TB sensing measurement process, since the U-STA device participates in the TB sensing measurement process as a sensing responder, it needs to obtain a parameter change status of the BSS in which the AP device is located. Therefore, the AP device carries the first identification information in the sensing measurement request frame, and the first identification information carries the parameter change information bit of the BSS in which the AP device is located, so that the U-STA device may obtain the parameter change status of the BSS in which the AP device is located and participates in the TB sensing measurement process.

In step 404, the first radio frame is sent to the U-STA device.

In some embodiments, as shown in FIG. 4, the sensing measurement request frame includes a sensing measurement parameter element.

The first identification information is carried in the sensing measurement parameter element. A new information bit in the sensing measurement parameter element is used to carry the first identification information.

The parameter of the BSS includes at least one of: a transmit power envelope (TPE) or a punctured channel. It can be understood that, in the embodiments of the present disclosure, the parameter of the BSS also include parameters other than the TPE and the punctured channel, and will not be repeated here.

In some embodiments, as shown in FIG. 4, the parameter change information bit includes case 3 and case 4.

In case 3, the parameter change information bit includes a first identification bit and a second identification bit. The first identification bit is used to identify whether the TPE is changed. For example, the first identification bit being set to "0" indicates that the TPE is not changed, and the first identification bit being set to "1" indicates that the TPE is changed.

The second identification bit is used to identify whether the punctured channel is changed. For example, the second identification bit being set to "0" indicates that the punctured channel is not changed, and the second identification bit being set to "1" indicates that the punctured channel is changed.

In case 4, the parameter change information bit includes a third identification bit identifying that at least one of the TPE or the punctured channel is changed, and the first radio frame carries a subelement corresponding to a changed parameter, an element identifier of the subelement being the same as an element identifier of the sensing measurement parameter element in the first radio frame.

If the at least one of the TPE or the punctured channel is changed, the first radio frame carries one or more subelements corresponding to changed parameter(s), and for the one or more subelements, an element identifier is the same as an element identifier of an SBP information element in the first radio frame, so as to facilitate identification that the subelement is a subelement of the sensing measurement parameter.

In some embodiments, in case 4, as shown in FIG. 4, the subelement include a changed parameter. A subelement corresponding to the TPE includes a TPE subelement. A subelement corresponding to the punctured channel includes a bandwidth indication subelement. A format of the TPE subelement is shown in Table 4 below.

**Table 4:**

| information content | element ID | length | transmit power information | maximum transmit power | extension maximum transmit power |
|---|---|---|---|---|---|
| octets | 1 | 1 | 1 | variable | variable |

As shown in Table 4, the element ID is the same as the element ID of the sensing measurement parameter element, and the TPE subelement carries the changed parameter. For example, one or more parameters of the transmit power information, the maximum transmit power or the extension maximum transmit power are changed.

A format of the bandwidth indication subelement is shown in Table 5 below.

**Table 5:**

| information content | element ID | length | extension element ID | bandwidth indication parameter | bandwidth indication information |
|---|---|---|---|---|---|
| octets | 1 | 1 | | 1 | 3 or 5 |

As shown in Table 5, the element ID is the same as the element ID of the sensing measurement parameter element, and the bandwidth indication subelement carries the changed parameter. For example, one or more parameters of the extension element ID, the bandwidth indication parameter or the bandwidth indication information are changed.

Further, as shown in Table 6, a format of the bandwidth indication parameter is as follows.

**Table 6:**

| content | reserved | disabled subchannel bitmap present | reserved |
|---|---|---|---|
| bits | 1 | 1 | 6 |
| order of bits | B0 | B1 | B2 to B7 |

As shown in Table 6, in a case that a change in the bandwidth indication parameter may be that a change occurs in the disabled subchannel bitmap, the bandwidth indication subelement carries the changed parameter.

In some embodiments, names of information and the like are not limited to those recorded in the embodiments, and terms such as "information", "message", "signal", "signaling", "report", "configuration", "indication", "instruction", "command", "channel", "parameter", "domain", "field", "symbol", "codepoint", "bit", "data", "program", "chip" may be interchangeable.

In some embodiments, terms such as "moment", "time point", "time", and "time position" may be interchangeable, and terms such as "duration", "time period", "time window", "window", and "time" may be used interchangeably.

In some embodiments, terms such as "wireless access scheme", "waveform" and the like may be used interchangeably.

In some embodiments, terms such as "certain", "predetermined", "preset", "set", "indicated", "one certain", "any", "first" may be used interchangeably. Terms such as terms such as "certain A", "predetermined A", "preset A", "set A", "indicated A", "one certain A", "any A", "first A" may be interpreted as A that is pre-specified in a protocol or the like, or as A obtained through setting, configuration, indication, or the like, or as a specific A, one certain A, any A, or a first A, etc., but are not limited thereto.

In some embodiments, determination or judgment may be performed using a value represented by one bit (0 or 1), using a boolean value represented by represented, or by comparison of numerical values (e.g., with a predetermined value), but is not limited thereto.

In some embodiments, an expression of "not expecting to receive" may be interpreted as not receiving on a time domain resource and/or a frequency domain resource, or as, after receiving data or the like, not performing subsequent processing on the data or the like. An expression of "not expecting to send" may be interpreted as not sending, or as sending but not expecting a receiver to respond to the sent content.

The method for updating the SBP parameter involved in the embodiments of the present disclosure may include at least one of the foregoing steps and embodiments. For example, step 201 may be implemented as an independent embodiment, step 302 may be implemented as an independent embodiment, and step 403 may be implemented as an independent embodiment. A combination of step 201 and step 202 may be implemented as an independent embodiment, a combination of step 301 and step 302 may be implemented as an independent embodiment, and a combination of step 402 and step 403 may be implemented as an independent embodiment, but is not limited thereto.

In some embodiments, reference may be made to other optional implementations described before or after the description corresponding to FIG. 2 to FIG. 4.

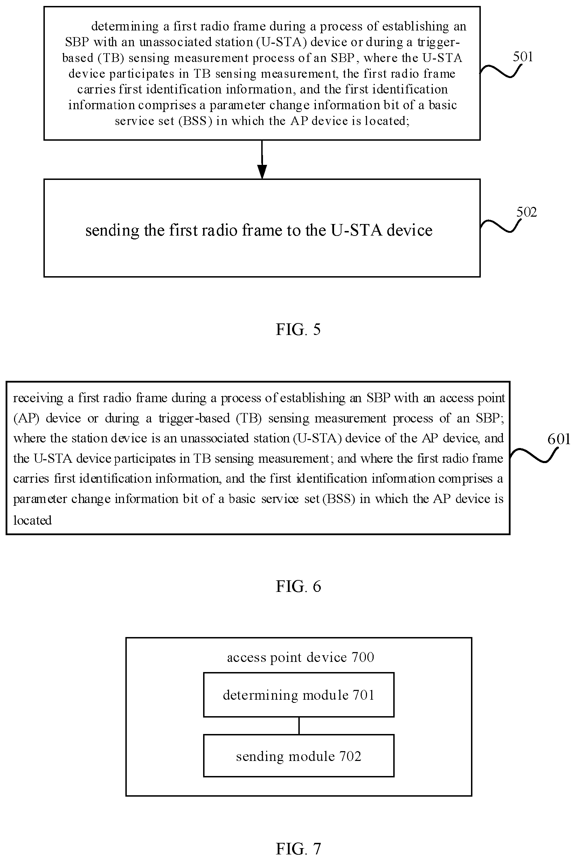

FIG. 5 is a flow chart of a method for updating a sensing by proxy (SBP) parameter according to an embodiment of the present disclosure.

As shown in FIG. 5, the method may be performed by an access point (AP) device, and the method includes the following steps.

In step 501, a first radio frame is determined during a process of establishing an SBP with an unassociated station (U-STA) device or during a trigger-based (TB) sensing measurement process of an SBP, where the U-STA device participates in TB sensing measurement, the first radio frame carries first identification information, and the first identification information includes a parameter change information bit of a basic service set (BSS) in which the AP device is located.

In step 502, the first radio frame is sent to the U-STA device.

Optionally, in the embodiments of the present disclosure, determining the first radio frame during the process of establishing the SBP with the U-STA device or during the TB sensing measurement process of the SBP includes: receiving an SBP request frame sent by the U-STA device during the process of establishing the SBP with the U-STA device, and in a case that the SBP request frame indicates that the U-STA device participates in the TB sensing measurement, and a parameter of the BSS in which the AP device is located changes, determining the first radio frame, where the first radio frame includes an SBP response frame; or in a case that a parameter of the BSS in which the AP device is located changes during the TB sensing measurement process of the SBP, determining the first radio frame, where the first radio frame includes a sensing measurement request frame.

Optionally, in the embodiments of the present disclosure, the SBP response frame includes a sensing measurement parameter element; the first identification information is carried in the sensing measurement parameter element; and the parameter of the BSS includes at least one of: a transmit power envelope (TPE) or a punctured channel.

Optionally, in the embodiments of the present disclosure, the sensing measurement request frame includes a sensing measurement parameter element; the first identification information is carried in the sensing measurement parameter element; and the parameter of the BSS includes at least one of: a TPE or a punctured channel.

Optionally, in the embodiments of the present disclosure, the parameter change information bit includes a first identification bit and a second identification bit, the first identification bit being used to identify whether the TPE is changed, the second identification bit being used to identify whether the punctured channel is changed; or the parameter change information bit includes a third identification bit identifying that at least one of the TPE or the punctured channel is changed, and the first radio frame carries a subelement corresponding to a changed parameter, an element identifier of the subelement being the same as an element identifier of the sensing measurement parameter element in the first radio frame.

Optionally, in the embodiments of the present disclosure, the subelement includes the changed parameter; a subelement corresponding to the TPE includes a TPE subelement; and a subelement corresponding to the punctured channel includes a bandwidth indication subelement.

The method for updating the SBP parameter involved in the embodiments of the present disclosure may include at least one of the foregoing steps and embodiments. For example, step 501 may be implemented as an independent embodiment. A combination of step 501 and step 502 may be implemented as an independent embodiment, but is not limited thereto.

In some embodiments, reference may be made to other optional implementations described before or after the description corresponding to FIG. 5.

FIG. 6 is another flow chart of a method for updating a sensing by proxy (SBP) parameter according to an embodiment of the present disclosure.

As shown in FIG. 6, the method may be performed by a station device, and the method includes the following steps.

In step 601, a first radio frame is received during a process of establishing an SBP with an access point (AP) device or during a trigger-based (TB) sensing measurement process of an SBP. The station device is an unassociated station (U-STA) device of the AP device, and the U-STA device participates in TB sensing measurement. The first radio frame carries first identification information, and the first identification information includes a parameter change information bit of a basic service set (BSS) in which the AP device is located.

Optionally, in the embodiments of the present disclosure, receiving the first radio frame during the process of establishing the SBP with the AP device or during the TB sensing measurement process of the SBP includes: sending an SBP request frame to the AP device during the process of establishing the SBP with the AP device, where the SBP request frame indicates that the U-STA device participates in the TB sensing measurement; and receiving the first radio frame sent by the AP device, where the first radio frame includes an SBP response frame; or receiving the first radio frame sent by the AP device during the TB sensing measurement process of the SBP, where the first radio frame includes a sensing measurement request frame.

Optionally, in the embodiments of the present disclosure, the SBP response frame includes a sensing measurement parameter element; the first identification information is carried in the sensing measurement parameter element; and a parameter of the BSS includes at least one of: a transmit power envelope (TPE) or a punctured channel.

Optionally, in the embodiments of the present disclosure, the sensing measurement request frame includes a sensing measurement parameter element; the first identification information is carried in the sensing measurement parameter element; and a parameter of the BSS includes at least one of: a TPE or a punctured channel.

Optionally, in the embodiments of the present disclosure, the parameter change information bit includes a first identification bit and a second identification bit, the first identification bit being used to identify whether the TPE is changed, the second identification bit being used to identify whether the punctured channel is changed; or the parameter change information bit includes a third identification bit, the third identification bit identifying that at least one of the TPE or the punctured channel is changed, and the first radio frame carries a subelement corresponding to a changed parameter, an element identifier of the subelement being the same as an element identifier of the sensing measurement parameter element in the first radio frame.

Optionally, in the embodiments of the present disclosure, the subelement includes the changed parameter; a subelement corresponding to the TPE includes a TPE subelement; a subelement corresponding to the punctured channel includes a bandwidth indication subelement.

The embodiments of the present disclosure further provide an apparatus for implementing any of the above methods, for example, an apparatus is provided, and the above apparatus includes a unit or module for implementing each step performed by the terminal in any of the above methods. For another example, another apparatus is also provided, including a unit or module for implementing each step performed by a network device (such as an access network device, a core network function node, a core network device, etc.) in any of the above methods.

It should be understood that a division of the unit or module in the apparatus is only a division of a logical function, and in actual implementation, they may be fully or partially integrated into one physical entity, or they may be physically separated. In addition, the unit or module in the apparatus may be implemented in the form of a processor calling software. For example, the apparatus includes a processor, the processor is connected to a memory, and instructions are stored in the memory. The processor calls the instructions stored in the memory to implement any of the methods or implement a function of the unit or module of the apparatus. The processor is, for example, a general-purpose processor, such as a central processing unit (CPU) or a microprocessor, and the memory is a memory inside the apparatus or a memory outside the apparatus. Alternatively, the unit or module in the apparatus may be implemented in the form of a hardware circuit, and the hardware circuit is designed to implement a function of some or all of the units or modules. The above hardware circuit may be understood as one or more processors. For example, in an implementation, the hardware circuit is an application-specific integrated circuit (ASIC), and the functions of some or all of the units or modules are implemented by designing a logical relationship of components in the circuit. For another example, in another implementation, the hardware circuit may be implemented by a programmable logic device (PLD). Taking a field programmable gate array (FPGA) as an example, which may include a large number of logic gate circuits, and a connection relationship between the logic gate circuits is configured by a configuration file, so as to implement the functions of some or all of the units or modules. All of the units or modules of the apparatus may be implemented in the form of a processor calling software, or in the form of a hardware circuit, or in part by the processor calling software and the rest by the hardware circuit.

In the embodiments of the present disclosure, the processor is a circuit with a signal processing capability. In an implementation, the processor may be a circuit with an instruction reading and an execution capability, such as a central processing unit (CPU), a microprocessor, a graphics processing unit (GPU) (which may be understood as a microprocessor), or a digital signal processor (DSP). In another implementation, the processor may implement certain functions through a logical relationship of the hardware circuit, and the logical relationship of the hardware circuit may be fixed or reconfigurable. For, example, the processor is a hardware circuit implemented by the application-specific integrated circuit (ASIC) or the programmable logic device (PLD), such as the FPGA. In a reconfigurable hardware circuit, a process of the processor loading a configuration file to implement a hardware circuit configuration may be understood as a process of the processor loading instructions to implement the functions of some or all of the units or modules. In addition, it may also be a hardware circuit designed for artificial intelligence, which may be understood as the ASIC, such as a neural network processing unit (NPU), a tensor processing unit (TPU), a deep learning processing unit (DPU), etc.

FIG. 7 is a block diagram illustrating an access point (AP) device according to an embodiment of the present disclosure. As shown in FIG. 7, the AP device 700 may include at least one of: a determining module 701, a sending module 702, or the like.

In some embodiments, the determining module is configured to determine a first radio frame during a process of establishing a sensing by proxy (SBP) with an unassociated station (U-STA) device or during a trigger-based (TB) sensing measurement process of the SBP, where the U-STA device participates in the TB sensing measurement, the first radio frame carries first identification information, and the first identification information includes a parameter change information bit of a basic service set (BSS) in which the AP device is located

Optionally, the determining module 701 is configured to perform at least one of the communication steps (e.g., step 201, step 302, step 403, step 501, but not limited thereto) performed by the AP device in any of the above methods, and will not be repeated here. The sending module 702 is configured to perform at least one of step 202, step 303, or step 502, and will not be repeated here.

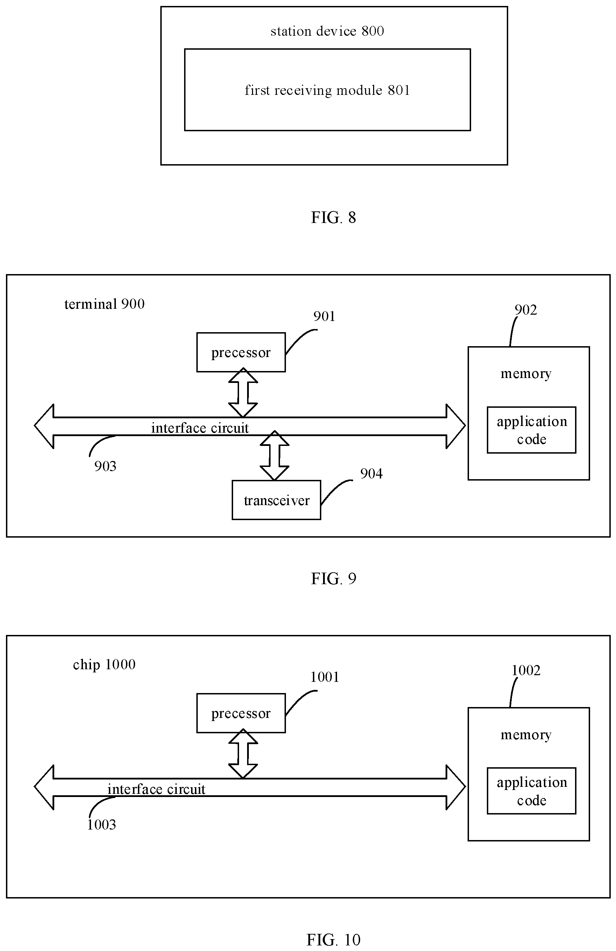

FIG. 8 is a block diagram illustrating a station device according to an embodiment of the present disclosure. As shown in FIG. 8, the station device 800 may include a first receiving module 801.

In some embodiments, the first receiving module is configured to receive a first radio frame during a process of establishing a sensing by proxy (SBP) with an access point (AP) device or during a trigger-based (TB) sensing measurement process of the SBP. The station device is an unassociated station (U-STA) device of the AP device, and the U-STA device participates in the TB sensing measurement. The first radio frame carries first identification information, and the first identification information includes a parameter change information bit of a basic service set (BSS) in which the AP device is located.

Optionally, the first receiving module 801 is configured to perform the communication steps (e.g., step 601, but not limited thereto) performed by the station device 101 in any of the above methods, which will not be described in detail herein.

FIG. 9 is a block diagram illustrating a terminal 900 (e.g., user equipment, etc.) according to an embodiment of the present disclosure. The terminal 900 may be a chip, a chip system, or a processor, etc., that supports a network device in implementing any of the above methods, and may also be a chip, a chip system, or a processor, etc., that supports a terminal in implementing any of the above methods. The terminal 900 may be configured to implement the methods described in the above method embodiments, and for details, reference may be made to the descriptions in the above method embodiments.

As shown in FIG. 9, the terminal 900 includes one or more processors 901. The one or more processors 901 may be a general-purpose processor or a dedicated processor, etc., for example, a baseband processor or a central processing unit. The baseband processor may be configured to process a communication protocol and communication data. The central processing unit may be configured to control a communication device (such as a base station, a baseband chip, a terminal device, a terminal device chip, a DU or a CU, etc.), perform a program, and process data of programs. The terminal 900 is configured to perform any of the above methods.

In some embodiments, the terminal 900 further includes one or more memories 902 for storing instructions. Optionally, all or part of one or more memories 902 may also be outside the terminal 900.

In some embodiments, the terminal 900 further includes one or more transceivers 904. When the terminal 900 includes one or more transceivers 904, the one or more transceivers 904 perform at least one of the communication steps such as sending and/or receiving in the above method (for example, step 202, step 301, step 401, step 402, step 404, step 501 but not limited thereto), and the one or more processor 904 performs at least one of other steps (for example, step 201, step 302, step 403, step 502, step 601 but not limited thereto).

In some embodiments, the transceiver may include a receiver and/or a transmitter, and the receiver and the transmitter may be separate or integrated together. Optionally, terms such as transceiver, transceiver unit, transceiver circuit, etc. may be used interchangeably, terms such as transmitter, transmission unit, transmission circuit, etc. may be used interchangeably, and terms such as receiver, receiving unit, receiving circuit, etc. may be used interchangeably.

In some embodiments, the terminal 900 may include one or more interface circuits 903. Optionally, the one or more interface circuits 903 are connected to the memory 902, and the one or more interface circuits 903 may be configured to receive signals from the memory 902 or other devices, and may be configured to send signals to the memory 902 or other devices. For example, the one or more interface circuits 903 may read instructions stored in the memory 902 and send the instructions to the processor 901.

The terminal 900 described in the above embodiments may be a communication device such as user equipment, but the scope of the terminal 900 described in the present disclosure is not limited thereto, and a structure of the terminal 900 may not be limited by FIG. 9. The communication device may be an independent device or may be part of a larger device. For example, the communication device may be: (1) an independent integrated circuit IC, or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

FIG. 10 is a block diagram illustrating a chip 1000 according to an embodiment of the present disclosure. In a case that the terminal 900 may be a chip or a chip system, reference may be made to the block diagram illustrating the chip 1000 shown in FIG. 10, but the present disclosure is not limited thereto.

The chip 1000 includes one or more processors 1001, and the chip 1000 is configured to perform any of the above methods.

In some embodiments, the chip 1000 further includes one or more interface circuits 1003. Optionally, the one or more interface circuits 1003 are connected to a memory 1002. The one or more interface circuits 1003 may be used to receive signals from the memory 1002 or other devices, and the one or more interface circuits 1003 may be configured to send signals to the memory 1002 or the other devices. For example, the one or more interface circuits 1003 may read instructions stored in the memory 1002 and send the instructions to the processor 1001.

In some embodiments, the one or more interface circuits 1003 perform at least one of the communication steps such as sending and/or receiving in the above method (for example, step 202, step 301, step 303, step 401, step 402, step 404, step 501 but not limited thereto), and the processor 901 performs at least one of other steps (for example, step 201, step 302, step 403, step 502, step 601 but not limited thereto).

In some embodiments, terms such as interface circuit, interface, transceiver pin, and transceiver may be used interchangeably.

In some embodiments, the chip 1000 further includes one or more memories 1002 for storing instructions. Optionally, all or part of the one or more memories 1002 may be outside the chip 1000.

The present disclosure further provides a storage medium, on which instructions are stored. When the instructions are executed on the terminal 900, the terminal 900 executes any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a temporary storage medium.

The present disclosure further provides a program product, which, when executed by the terminal 900, enables the terminal 900 to perform any of the above methods. Optionally, the program product is a computer program product.

The present disclosure also further provides a computer program, which, when executed on a computer, causes the computer to perform any of the above methods.

## Claims

1. A method for updating a sensing by proxy (SBP) parameter, performed by an access point (AP) device, comprising:
determining a first radio frame during a process of establishing an SBP with an unassociated station (U-STA) device or during a trigger-based (TB) sensing measurement process of an SBP, wherein the U-STA device participates in TB sensing measurement, the first radio frame carries first identification information, and the first identification information comprises a parameter change information bit of a basic service set (BSS) in which the AP device is located; and
sending the first radio frame to the U-STA device.

2. The method according to claim 1, wherein determining the first radio frame during the process of establishing the SBP with the U-STA device or during the TB sensing measurement process of the SBP comprises:
receiving an SBP request frame sent by the U-STA device during the process of establishing the SBP with the U-STA device, and
in a case that the SBP request frame indicates that the U-STA device participates in the TB sensing measurement, and a parameter of the BSS in which the AP device is located changes, determining the first radio frame, wherein the first radio frame comprises an SBP response frame;
or
in a case that a parameter of the BSS in which the AP device is located changes during the TB sensing measurement process of the SBP, determining the first radio frame, wherein the first radio frame comprises a sensing measurement request frame.

3. The method according to claim 2, wherein the SBP response frame comprises a sensing measurement parameter element;
the first identification information is carried in the sensing measurement parameter element; and
the parameter of the BSS comprises at least one of: a transmit power envelope (TPE) or a punctured channel.

4. The method according to claim 2, wherein the sensing measurement request frame comprises a sensing measurement parameter element;
the first identification information is carried in the sensing measurement parameter element; and
the parameter of the BSS comprises at least one of: a TPE or a punctured channel.

5. The method according to claim 3 or 4, wherein
the parameter change information bit comprises a first identification bit and a second identification bit, the first identification bit being used to identify whether the TPE is changed, the second identification bit being used to identify whether the punctured channel is changed; or
the parameter change information bit comprises a third identification bit identifying that at least one of the TPE or the punctured channel is changed, and the first radio frame carries a subelement corresponding to a changed parameter, an element identifier of the subelement being the same as an element identifier of the sensing measurement parameter element in the first radio frame.

6. The method according to claim 5, wherein the subelement comprises the changed parameter;
a subelement corresponding to the TPE comprises a TPE subelement; and
a subelement corresponding to the punctured channel comprises a bandwidth indication subelement.

7. A method for updating a sensing by proxy (SBP) parameter, performed by a station device, comprising:
receiving a first radio frame during a process of establishing an SBP with an access point (AP) device or during a trigger-based (TB) sensing measurement process of an SBP;
wherein the station device is an unassociated station (U-STA) device of the AP device, and the U-STA device participates in TB sensing measurement; and
wherein the first radio frame carries first identification information, and the first identification information comprises a parameter change information bit of a basic service set (BSS) in which the AP device is located.

8. The method according to claim 7, wherein receiving the first radio frame during the process of establishing the SBP with the AP device or during the TB sensing measurement process of the SBP comprises:
sending an SBP request frame to the AP device during the process of establishing the SBP with the AP device, wherein the SBP request frame indicates that the U-STA device participates in the TB sensing measurement, and
receiving the first radio frame sent by the AP device, wherein the first radio frame comprises an SBP response frame; or
receiving the first radio frame sent by the AP device during the TB sensing measurement process of the SBP, wherein the first radio frame comprises a sensing measurement request frame.

9. The method according to claim 8, wherein the SBP response frame comprises a sensing measurement parameter element;
the first identification information is carried in the sensing measurement parameter element; and
a parameter of the BSS comprises at least one of: a transmit power envelope (TPE) or a punctured channel.

10. The method according to claim 8, wherein the sensing measurement request frame comprises a sensing measurement parameter element;
the first identification information is carried in the sensing measurement parameter element; and
a parameter of the BSS comprises at least one of: a TPE or a punctured channel.

11. The method according to claim 9 or 10, wherein
the parameter change information bit comprises a first identification bit and a second identification bit, the first identification bit being used to identify whether the TPE is changed, the second identification bit being used to identify whether the punctured channel is changed; or
the parameter change information bit comprises a third identification bit, the third identification bit identifying that at least one of the TPE or the punctured channel is changed, and the first radio frame carries a subelement corresponding to a changed parameter, an element identifier of the subelement being the same as an element identifier of the sensing measurement parameter element in the first radio frame.

12. The method according to claim 11, wherein the subelement comprises the changed parameter;
a subelement corresponding to the TPE comprises a TPE subelement;
a subelement corresponding to the punctured channel comprises a bandwidth indication subelement.

13. An access point (AP) device, comprising:
a determining module configured to determine a first radio frame during a process of establishing a sensing by proxy (SBP) with an unassociated station (U-STA) device or during a trigger-based (TB) sensing measurement process of an SBP, wherein the U-STA device participates in TB sensing measurement, the first radio frame carries first identification information, and the first identification information comprises a parameter change information bit of a basic service set (BSS) in which the AP device is located; and
a sending module configured to send the first radio frame to the U-STA device.

14. A station device, comprising:
a first receiving module configured to receive a first radio frame during a process of establishing a sensing by proxy (SBP) with an access point (AP) device or during a trigger-based (TB) sensing measurement process of an SBP;
wherein the station device is an unassociated station (U-STA) device of the AP device, and the U-STA device participates in TB sensing measurement; and
wherein the first radio frame carries first identification information, and the first identification information comprises a parameter change information bit of a basic service set (BSS) in which the AP device is located.

15. An access point (AP) device, comprising:
one or more processors;
wherein the AP device is configured to perform the method according to any one of claims 1 to 6.

16. A station device, comprising:
one or more processors;
wherein the station device is configured to perform the method according to any one of claims 7 to 12.

17. A communication system, comprising an access point (AP) device and a station device, wherein the AP device is configured to perform the method according to any one of claims 1 to 6, and the station device is configured to perform the method according to any one of claims 7 to 12.

18. A storage medium for storing instructions that, when executed on a communication device, cause the communication device to perform the method according to any one of claims 1 to 6 or the method according to any one of claims 7 to 12.
